Europäisches Patentamt

(19) European Patent Office

Office européen des brevets

(11) Publication number: **0 025 134**
**B1**

(12) **EUROPEAN PATENT SPECIFICATION**

(45) Date of publication of patent specification: **24.10.84**

(21) Application number: **80104785.3**

(22) Date of filing: **13.08.80**

(51) Int. Cl.³: **B 29 H 17/20**

(54) **Apparatus and method for applying, stitching and severing a tape onto a body.**

(30) Priority: **11.09.79 PCT/US 79/00739**

(43) Date of publication of application:
**18.03.81 Bulletin 81/11**

(45) Publication of the grant of the patent:
**24.10.84 Bulletin 84/43**

(84) Designated Contracting States:
**DE FR GB IT**

(56) References cited:
**US-A-3 717 529**

(73) Proprietor: **CATERPILLAR TRACTOR CO.**
**100 Northeast Adams Street**
**Peoria Illinois 61629 (US)**

(72) Inventor: **Stevens, Samuel Benjamin**
**405 Fairlane**
**Pekin Illinois 61554 (US)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

## Description

### Technical Field

This invention relates to an apparatus and a method for applying a tape to a body and, more particularly, to an apparatus for automatically tacking, applying, stitching and then severing the tape in a particular manner.

### Background Art

In the manufacture of tape-wound toroidal bodies, such as tires and the like, a large amount of manual labor is still required particularly in starting and stopping the application of each layer of tape on the body. One such problem prevails in the application of a tape of rubber to a toroidal carcass wherein the tape is initially hand held to the carcass until the applicator and stitching head takes over to apply the desired amount of material. At the conclusion of the application of the tape, the equipment is shut down and the tape is manually severed and the free end tacked to the carcass.

One device shown in U.S. Patent 3,717,529, which issued to W. L. Rattray et al on February 20, 1973, discloses an apparatus for automatically advancing an applicator head for applying an end of a tape to the carcass after which the carcass is rotated to start to wrap the tape on the carcass. The applicator head is retracted from the carcass and is subsequently used to guide the tape to separate stitching rollers which applies and stitches the tape to the carcass. A brake is actuated by a logic control signal to stop rotation of the applicator head whereupon the continued rotation of the carcass under the stitching rollers stretches the tape between the stitching rollers and the applicator head until it breaks. The free end of the tape connected to the source of the tape drapes over the applicator head ready for the next application.

Withdrawal of the applicator head from the carcass and applying the tape to the carcass using only the stitching rollers may not produce a one-hundred percent bubble free or fully stitched tape onto the carcass. Applying the brake to the applicator head in response to a logic signal may not be triggered in a timely fashion so that the tape is severed in a less than optimum location.

### Disclosure of Invention

The present invention as claimed in claims 1 and 10 is directed to overcoming one or more of the problems as set forth above.

According to the present invention, a tape-applying apparatus is provided with an applicator head which automatically tacks a free end of a tape to a body which is then rotated past the engaged applicator head and stitcher assembly to continually stitch a predetermined layer or layers of tape to the body. The applicator head and the stitcher assembly remain in contact with the body. At the conclusion of the application, the apparatus retracts from the body so as to separate the applicator head from the body with at least a portion of the stitcher assembly still in stitching contact with the body. A brake is provided which is activated by the relative movement between the applicator head and the stitcher assembly, whereby the brake engages the applicator head to stop rotation of the applicator head. The length of tape between the applicator head and the stitcher head is stretched until it breaks with the free end of the tape, that is connected to the source of the tape, draping over the applicator head ready for the next application of tape to the same or to a different body.

### Brief Description of Drawings

Fig. 1 is an elevational view of a tape-applying apparatus including an applicator head and stitcher assembly with the brake-applying apparatus for the applicator head;

Fig. 2 is an elevational view similar to Fig. 1 only with the applicator head and stitcher assembly in operative tape-applying contact with a body;

Fig. 3 is an elevational view similar to Fig. 1 only with the applicator head retracted and the stitcher assembly partially retracted so that the tape is just breaking;

Fig. 4 is a view taken along the line 4—4 of Fig. 1;

Fig. 5 is an enlarged view taken along the line 5—5 of Fig. 2;

Fig. 6 is an enlarged elevational view of one holder of the stitcher assembly; and

Fig. 7 is an enlarged elevational view of a second holder of the stitcher assembly.

### Best Mode for Carrying Out the Invention

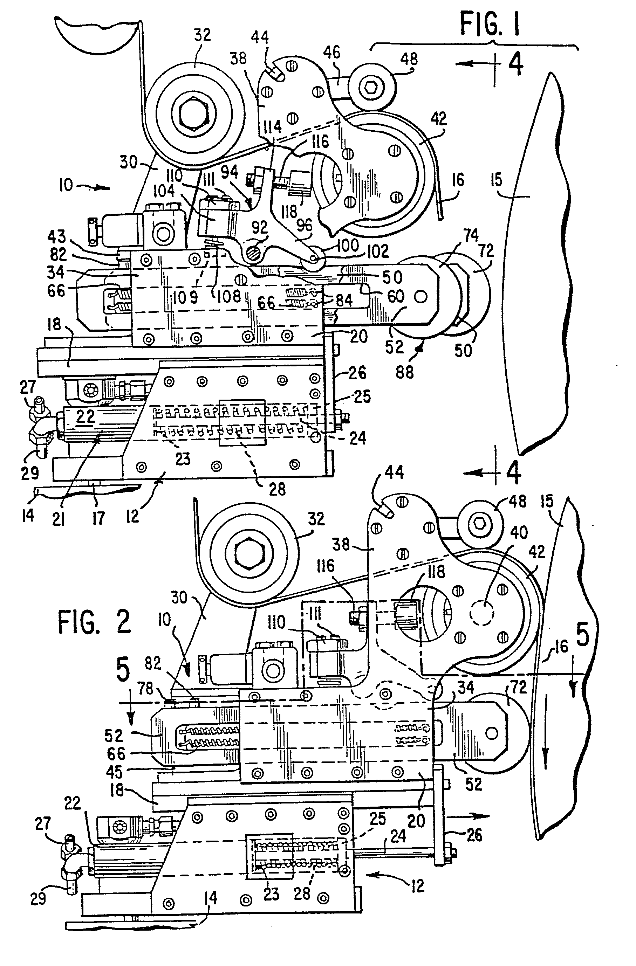

Referring to Fig. 1 of the drawings, a tape-applying apparatus 10 is shown slidably mounted on a cross slide assembly 12 which is pivotally mounted on the end of a support arm 14. The support arm 14 is manipulated to position the cross slide assembly 12 and the tape-applying apparatus 10 in close proximity to a body 15 to which the tape 16 is to be applied. Since the structure and operation of the support arm 14, the pivot 17, and, the cross slide assembly 12 relative to the body 15 are well known in the art, no detailed description thereof will be made in this disclosure. Suffice it to say, the support arm 14 locates and orients the cross slide assembly 12 and the tape-applying apparatus 10 at an appropriate location relative to the body 15 and moves back and forth across the tread area and the side walls of the body 15 during the application of the tape 16 so as to apply a layer or layers of tape 16 to the body 15 in a predetermined manner.

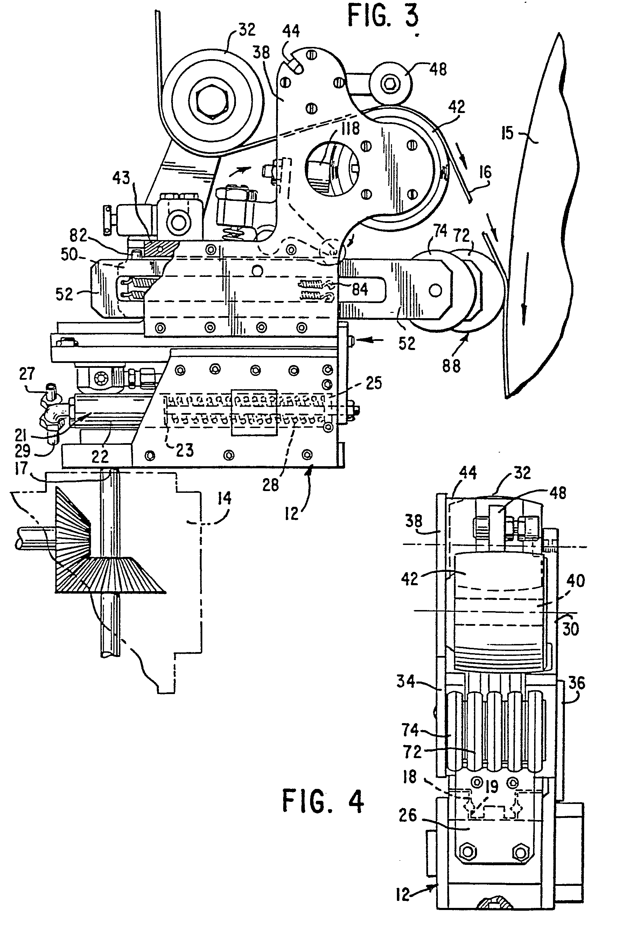

The cross slide assembly 12 and the housing 20 of the tape-applying apparatus 10 have interfitting guides 18, Fig. 4, carried by the housing 20 and tracks 19 in the top wall of the cross slide assembly 12 which slidably coact to permit the housing 20 to move back and forth relative to the cross slide assembly 12. A typical guide and track assembly is marketed by The Bendix Corporation as a Schneeberger NK3-105 top (guide 18) and NK3-180 base (track 19). A fluid actuator 21 is mounted on the cross slide assembly 12 and includes a cylinder 22 in which is slidably mounted a reciprocating piston 23. An actuator rod 24 is connected to the piston 23 and extends from the cylinder 22 along an axis substantially parallel to the axis of the guides 18 and tracks 19. The actuator rod 24 is connected to a plate 26 which is secured, as by bolts, to the lower front of the housing 20 so that admitting fluid to the cylinder 22 through inlet 27 will move the piston 23 and extend the actuator rod 24 to move the tape-applying apparatus 10 along the tracks 19 on the cross slide assembly 12. A spring 28 is positioned in the cylinder 22 and encircles the rod 24. The spring 28 bears against the piston 23 and against the end wall 25 of the cylinder 22 so that exhausting the cylinder 22 through outlet 29 will permit the spring 28 to move the actuator rod 24 and the tape-applying apparatus 10 away from the body 15.

A bracket 30, as can be seen in Figs. 1 and 4, is secured to and extends up from the one side of the cross slide assembly 12 to support a transposition roller 32 above the tape-applying apparatus 10. The transposition roller 32, being mounted on the cross slide assembly 12, will move with the cross slide assembly 12 to guide the tape as it is received from a source of supply, not shown. The tape 16 will exit the roller 32 along an established path as it is directed toward the body 15 no matter how the tape-applying apparatus 10 and the cross slide assembly 12 are oriented with respect to the support arm 14. As an example, assuming that the tape 16 is a strip of rubber to be applied to a tire body or carcass, the strip will be supplied from an extruder, not shown, and will exit roller 32 in an established path.

The tape-applying apparatus 10 has the housing 20 comprised of a pair of spaced apart side plates 34 and 36 secured thereto with plate 34 having an upwardly extending arm 38 for supporting, in a cantilever fashion, an axle 40 about which an applicator roller 42 is rotably mounted. A thickness transducer 44 is mounted on the arm 38 and has an arm 46 extending from the transducer 44 and supporting a feeler roller 48 in contact with the applicator roller 42 or in contact with the tape 16 passing between the applicator roller 42 and the feeler roller 48. The thickness transducer 44 is connected to a programmed control to sense when the tape 16 is too thick or too thin whereupon the controls will signal the source of the tape, such as the extruder or the like, to automatically decrease or increase the thickness of the tape 16 until it is within the tolerable limits.

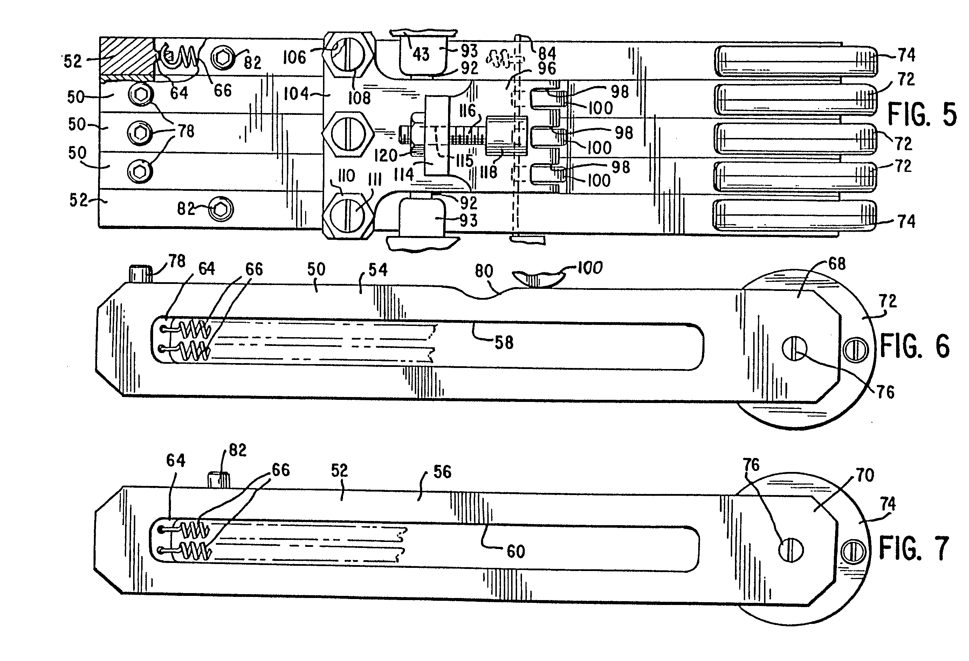

Slidably mounted between the side plates 34, 36 and between a top plate 43 and a bottom plate 45 of the housing 20 of the tape-applying apparatus 10 is a plurality of slide holders 50 and 52, which slide holders are shown in detail in Figs. 5, 6 and 7. In the present embodiment, three holders 50 are juxtaposed with respect to each other and are positioned between two spaced apart holders 52. The slide holders 50 and 52 are comprised of an elongate body portion 54 and 56, respectively, with elongate slots 48 and 60 cut throughout substantially the length of said body portions 54 and 56. At one end of each slot 58 and 60, a retaining web 64 is provided which has two vertically spaced openings for receiving one end of a pair of springs 66. The springs 66 are nested in the slots 58 and 60 and have their opposite ends anchored to a pair of pins 84 extending from one side plate 34 to the other side plate 36. The pins 84 extend through the elongate slots 58, 60 in the holders 50, 52, respectively. The forward or extended end portions 68 and 70 of the holders 50 and 52, respectively, are bifurcated, as viewed in Fig. 5, and receive stitching rollers 72 and 74 pivotally mounted about pivot pins 76 passing between the arms of the bifurcated portions 68 and 70. Each slide holder 50 has an upwardly extending stop lug 78 on the upper edge of the body portion 54 and positioned close to the one extremity of the holder, said extremity being spaced from the end of the holder supporting the roller 72. Each holder 50 also has a camming recess 80 formed in the upper edge of the body portion 54 thereof, said camming recesses 80 being transversely aligned with each other when the rollers 72 are transversely aligned. Each holder 52 has an upwardly extending stop lug 82 on the upper edge of the body portion 56 and positioned inboard a distance in excess of the spacing of the stop lug 78 from the end of holder 50.

As can be seen in Fig. 5, holders 52 comprise the two outboard holders and holders 50 comprise the three inboard holders. When the extremities of the five holders 52, 50, 50, 50, 52 are aligned, the stop lugs 78 on the holders 50 are spaced longitudinally from the stop lugs 82 on the holders 52. The springs 66, between the holders 50, 52 and the housing 20, are all loaded so as to urge the holders 50 and 52 outward or to the right of the housing 20, as viewed in Figs. 1 through 3. In Fig. 1, the springs 66 have urged the holders 50 and 52 to the right so that all five stop lugs 78 and 82 are in alignment with each other and engage the edge of the top plate 43 of the housing 20, the contact with the top plate 43 being shown in Fig. 3. The five holders 50 and 52, with the rollers 72 and 74 form the stitcher assembly 88 for the tape-applying apparatus 10.

A brake assembly 94 is pivotally mounted about a pivot 92 extending between brackets 93 on the top plate 43 of the housing 20. The brake assembly 94 is comprised of a forwardly extending plate 96 which has three cutouts 98 in the forward edge thereof, Fig. 5, in which cutouts 98 are rotatably mounted three cam rollers 100. The cam rollers 100 are retained in the cutouts 98 by means of a pin 102. The brake assembly 94 has an arm portion 104 extending from the pivot 92 in a direction opposite to the direction of plate 96. The arm portion 104 has three threaded openings 106, in each one of which is positioned a spring 108. The lower ends of the springs 108 nest in three sockets 109 formed in the top plate 43 of the housing 20. A lock nut 110 is threaded on a threaded pilot member 111, which pilot member 111 is threaded in opening 106 and bears on the springs 108 for adjusting the loading on the springs 108. Extending upwardly from the pivot 92 at the junction between the plate 96 and the arm portion 104 is a tang 114 which has a member 116 threaded through a threaded opening 115 therein. A resilient braking member or block 118 is mounted on an extended end of said member 116. A lock nut 120 is threaded on the member 116 and bears against the tang 114 for locking the forward surface of the braking member or block 118 in position relative to the brake assembly 94. The springs 108 urge the brake assembly 94 in a clockwise direction around the pivot 92 to urge the cam rollers 100 into contact with the top surfaces of the three holders 50. As the holders 50 are moved in the housing 20, the cam rollers 100 will roll on the top edges of the holders 50 and will drop into the cam recesses 80 when the holders 50 are fully extended relative to the housing 20. When the cam rollers 100 drop into the cam recesses 80, the brake assembly 94 is pivoted clockwise by the springs 108 which will urge the braking member or block 118 against the applicator roller 42 to stop rotation of said applicator roller. All three cam rollers 100 must drop into all three cam recesses 80 in order for the brake to be applied. This will prevent false braking caused by one or two slide holders becoming extended as when the tape 16 is being applied around a corner or around a shoulder, such as between the tread and a side wall of a tire.

Industrial Applicability

Referring to Fig. 1, a tape 16 is fed around the transposition roller 32 and threaded between the feeler roller 48 and the applicator roller 42 with the end of the tape 16 hanging freely from the applicator roller 42. Since the tape-applying apparatus 10 is in the retracted position relative to the cross slide assembly 12, the holders 50 and 52 are in the fully forward position with the stop lugs 78 and 82 bearing against the end of the top plate 43 and the stitching rollers 72 and 74 are spaced from the body 15. The cam rollers 100 are seated in the cam recesses 80 and the brake assembly 94 is pivoted clockwise with the braking member or block 118 bearing against the applicator roller 42 to prevent rotation of the applicator roller 42. To apply tape 16 to the body 15, the fluid actuator 21 on the cross slide assembly 12 is activated to move the actuator rod 24 and tape-applying apparatus 10 forward to contact the stitching rollers 72 and 74 with the body 15. As the actuator rod 24 is moved outward of the cylinder 22, the spring 28 is compressed between piston 23 and end wall 25. Once the stitching rollers 72, 74 contact the body 15, the slide holders 50 and 52 will remain stationary with respect to the body 15 as the housing 20 continues to move toward the body 15 which will roll the cam rollers 100 out of the cam recesses 80 to pivot the brake assembly 94 in a counterclockwise direction and release the braking member or block 118 from the surface of the applicator roller 42. The ends of the springs 66, pinned by pins 84 to the housing 20, will move relative to the holders 50, 52 to stretch the springs 66 to spring load the stitching rollers 72, 74 against the body 15. Continued movement of the housing 20 toward the body 15 will engage the free end of the tape 16 and the applicator roller 42 against the body 15, to tack the tape 16 to the body 15. Rotation of the body 15 in a counterclockwise direction will pull the tape 16 from the applicator roller 42 to between the stitching rollers 72 and 74 and the body 15. The stitching rollers 72, 74 will stitch the tape 16 to the body 15. The applicator roller 42 will remain in contact with the body 15 to feed the tape 16 to the body 15, which tape 16 is then tacked and stitched by the stitching rollers 72 and 74.

When the desired thickness of the layer of tape has been added to the body 15, a command signal from the controls will exhaust the fluid from cylinder 22 through exhaust outlet 29, whereupon the spring 28 will drive the piston 23, rod 24 and housing 20 of the tape-applying apparatus 10 from the body 15 to separate the applicator roller 42 from the body 15. When the housing 20 has retracted from the body 15 a predetermined amount, the cam rollers 100 will drop into the cam recesses 80 in the holders 50 whereupon the springs 108 will pivot the brake assembly 94 in a clockwise direction to apply the braking member or block 118 against the applicator roller 42 to stop further rotation of the applicator roller 42. Since the stitching rollers 72 on the holders 50 are still in contact with the body 15, they will continue to stitch the tape 16 to the continually rotating body 15, but, since the applicator roller 42 is not rotating, no material is being fed from the applicator roller 42, so that the tape 16 will be stretched and will be severed between the stitching rollers 72 and the applicator roller 42. The one free end of the tape 16 will remain draped over the applicator head ready for the next application and the other free end of the tape 16 will be stitched to the body 15 by the stitching rollers 72. The controls will command retraction of the tape-applying apparatus 10 from the body 15 by the support arm 14 which will move the tape-applying apparatus 10 to the condition of Fig. 1, wherein the apparatus is again ready to be moved forward into contact with the same or a different body for application of another layer of tape thereto.

In one modified form of the invention, when the layer of tape 16 has been built up to a desired thickness, all drives are stopped. The controls will then command outlet 29 to exhaust the fluid from the cylinder 22 so that the spring 28 will retract the housing 20 and applicator roller 42 from contact with the body 15. The springs 66 will retain the stitching rollers 72, 74 in contact with the body 15. At a predetermined point, the cam rollers 100 will engage in cam recesses 80 to apply the braking member or block 118 to the applicator roller 42 to prevent further rotation of the applicator roller 42. The controls will command a small amount of rotation to the body 15 which will stretch the tape 16 between the stitching rollers 72 and the applicator roller 42 until the tape 16 severs therebetween with the one free end of the tape 16 draping over the applicator roller 42 ready for the next application to a body 15 and with the other free end of the tape 16 being stitched to the rotating body 15 by the stitching rollers 72.

## Claims

1. An apparatus (10) adapted for severing a tape (16) being applied to a body (15) as said body (15) is moved past the apparatus (10), and having a housing (20) adapted for movement toward and away from said body (15), an applicator roller (42) carried by said housing (20) for applying tape (16) to said body (15), brake means (94) for arresting rotation of said application roller (42), a holder (50) slidably carried on the housing (20), a stitching roller (72) rotatably mounted on said holder (50), resilient means (66) urging said holder (50) toward said body (15) and said stitching roller (72) in contact with said body (15), characterized by: said brake means (94) being pitotally mounted on said housing (20), and means (80) on said holder (50) for activating said brake means (94) when said housing (20) and said applicator roller (42) are moved away from said body (15) a predetermined amount.

2. An apparatus (10) as claimed in claim 1 wherein said brake means (94) includes a brake block (118) and is pivotally mounted on said housing (20), and spring means (108) urging said braking block (118) against said applicator roller (42) to arrest rotation of said applicator roller (42).

3. An apparatus (10) as claimed in claim 1 or claim 2 wherein said means (80) on said holder (50) for activating said brake means (94) is a cam recess (80) in one surface of said holder (50) and wherein said brake means (94) operatively contacts said cam recess (80) to pivot said brake means (94) to apply braking force to said applicator roller (42).

4. An apparatus (10) as claimed in claim 2 wherein said means (80) on said holder (50) for activating said brake means (94) is a cam recess (80) on said holder (50) and wherein said brake means (94) has a cam roller (100), said spring means (108) urging said cam roller (100) into said cam recess (80) when said holder (50) and said housing (20) are in a predetermined relative position.

5. An apparatus (10) as claimed in any of claims 1—2 wherein fluid actuator means (22) is provided for moving said housing (20) toward said body (15) to engage said applicator roller (42) and said stitching roller (72) with said body (15), whereby said tape (16) is applied directly to said body (15) by said applicator roller (42) and is stitched to said body (15) by said stitching roller (72).

6. An apparatus (10) as claimed in claim 5 wherein resilient means (28) are provided for moving said housing (20) and said applicator roller (42) away from said body (15) upon exhausting said fluid actuator means (22).

7. An apparatus (10) as claimed in any of claims 1—6 wherein said brake means (94) comprises: a brake assembly (94) having a plate (96) pivotally mounted on said housing (20), an arm portion (104) extending in a direction opposite to said plate (96), and a tang (114) extending from said plate (96), at least one cam roller (100) rotatably supported on said plate (96), said cam roller (100) engaging with said holder (50) and being adapted to engage with said means (80) on said holder (50) as said housing (20) and holder (50) are moved relative to each other, resilient means (108) extending between said housing (20) and said arm portion (104) of the brake assembly (94) for urging said cam roller (100) toward said holder (50), and a braking block (118) supported on said tang (114) and contacting said applicator roller (42) when said cam roller (100) is seated in said means (80) on said holder (50) for stopping rotation of said applicator roller (42).

8. An apparatus (10) as claimed in any of claims 1—7 wherein three holders (50) are slidably disposed side-by-side in said housing (20), and having a stitching roller (72) rotatably mounted on the projecting end of each holder (50) in said predetermined position relative to said applicator roller (42).

9. An apparatus (10) as claimed in claim 8 wherein stop means (78) are provided on each holder (50) to limit the extent of outward movement of said holders (50).

10. A method of applying, stitching, then severing a tape (16) being applied onto a body (15) comprising the steps of feeding a tape (16) to an applicator roller (42) in contact with the moving body (15), stitching said tape (16) to said body (15) by passing at least one stitching roller (72) over said tape (16) in contact with said body (15), applying a brake (94) to the applicator roller (42) to stop advancing said tape (16) to the body (15), continuing movement of said body (15) that is still in contact with said stitching roller (72) to stretch and sever the tape (16) between the applicator roller (42) and the stitching roller (72), characterized by:

retracting the applicator roller (42) from said body (15) upon completion of the buildup of the layer of tape (16) on said body (15), and wherein the brake (94) is activated by the relative movement between the applicator roller (42) and the stitching roller (72).

**Revendications**

1. Appareil (10) adapté à couper une bande (16) en train d'être appliquée sur un corps (15) pendant que ledit corps (15) se déplace devant l'appareil (10), et ayant une enveloppe (20) adaptée à s'approcher et à s'éloigner dudit corps (15), un galet applicateur (42) porté par ladite enveloppe (20) pour appliquer la bande (16) audit corps (15), un moyen de freinage (94) pour arrêter la rotation dudit galet applicateur (42), une monture (50) supportée à glissement sur l'enveloppe (20), un galet de pressage (72) monté à rotation sur ladite monture (50), un moyen élastique (66) sollicitant ladite monture (50) vers ledit corps (15) et ledit galet de pressage (72) au contact dudit corps (15), caractérisé par: ledit moyen de freinage (94) est monté à pivotement sur ladite enveloppe (20), et un moyen (80) est prévu sur ladite monture (50) pour activer ledit moyen de freinage (94) quand ladite enveloppe (20) et ledit galet applicateur (42) sont éloignés dudit corps (15) d'une mesure prédéterminée.

2. Appareil (10) selon la revendication 1, dans lequel ledit moyen de freinage (94) comprend un bloc de freinage (118) et est monté à pivotement sur ladite enveloppe (20), et un moyen à ressort (108) sollicitant ledit bloc de freinage (118) contre ledit galet applicateur (42) afin d'arrêter la rotation dudit galet applicateur (42).

3. Appareil (10) selon la revendication 1 ou 2, dans lequel ledit moyen (80) sur ladite monture (50) pour activer ledit moyen de freinage (94) est une dépression formant came (80) prévue dans une surface de ladite monture (50) et dans lequel ledit moyen de freinage (94) coopère avec ladite dépression (80) pour faire pivoter ledit moyen de freinage (94) afin d'appliquer une force de freinage audit galet applicateur (42).

4. Appareil (10) selon la revendication 2, dans lequel ledit moyen (80) prévu sur la monture (50) pour activer ledit moyen de freinage (94) est une dépression formant came (80) sur ladite monture (50) et dans lequel ledit moyen de freinage (94) comporte un galet de came (100), ledit moyen à ressort (108) sollicitant ledit galet de came (100) dans ladite dépression de came (80) quand ladite monture (50) et ladite enveloppe (20) sont dans une position relative prédéterminée.

5. Appareil (10) selon l'une des revendications 1—2, dans lequel un moyen actionneur à fluide (22) est prévu pour déplacer ladite enveloppe (20) vers ledit corps (15) afin d'appliquer ledit galet applicateur (42) et ledit galet de pressage (72) contre ledit corps (15), ce qui fait que ladite bande (16) est directement appliquée sur ledit corps (15) par ledit galet applicateur (42) et est pressée sur ledit corps (15) par ledit galet de pressage (72).

6. Appareil (10) selon la revendication 5, dans lequel des moyens élastiques (28) sont prévus pour éloigner ladite enveloppe (20) et ledit galet applicateur (42) dudit corps (15) lors de la mise à l'échappement dudit moyen actionneur à fluide (22).

7. Appareil (10) selon l'une quelconque des revendications 1—6, dans lequel ledit moyen de freinage (94) comprend: un ensemble de freinage (94) comportant une plaque (96) montée pivotement sur ladite enveloppe (20), un bras (104) s'étendant dans une direction opposée à ladite plaque (96), et une languette (114) s'étendant de ladite plaque (96), au moins un galet de came (100) supporté à rotation sur ladite plaque (96), ledit galet de came (100) étant en contact avec ladite monture (50) et adapté à venir en contact avec ledit moyen (80) de ladite monture (50) quand ladite enveloppe (20) et ladite monture (50) sont déplacées l'une par rapport à l'autre, un moyen élastique (108) s'étendant entre ladite enveloppe (20) et ledit bras (104) de l'ensemble de freinage (94) pour solliciter ledit galet de came (100) vers ladite monture (50), et un bloc de freinage (118) supporté sur ladite languette (114) et venant au contact dudit galet applicateur (42) quand ledit galet de came (100) est logé dans ledit moyen (80) de ladite monture (50) afin d'arrêter la rotation dudit galet applicateur (42).

8. Appareil (10) selon l'une quelconque des revendications 1—7, dans lequel trois montures (50) sont disposées à glissement côte-à-côte dans ladite enveloppe (20), et ayant un galet de pressage (72) monté à rotation sur l'extrémité saillante de chaque monture (50) dans ladite position prédéterminée par rapport audit galet applicateur (42).

9. Appareil (10) selon la revendication 8, dans lequel des moyens d'arrêt (78) sont prévus sur chaque monture (50) pour limiter l'amplitude du mouvement vers l'extérieur desdites montures (50).

10. Procédé pour appliquer, presser, puis couper une bande (16) en train d'être appliquée sur un corps (15), comprenant les étapes consistant à alimenter avec une bande (16) un galet applicateur (42) qui est en contact avec le corps en mouvement (15), à presser ladite bande (16) sur ledit corps (15) en faisant passer au moins un galet de pressage (72) sur ladite bande (16) en contact avec ledit corps (15), à appliquer un frein (94) au galet applicateur (42) pour arrêter l'avancement de ladite bande (16) vers le corps (15), à continuer le mouvement dudit corps (15) qui est encore en contact avec ledit galet de pressage (72) afin d'étirer et de couper la bande (16) entre le galet applicateur (42) et le galet de pressage (72), caractérisé en ce qu'on rétracte le galet applicateur (42) dudit corps (15) lors de l'achevement de la réalisation de la couche de bande (16) sur ledit corps (15), et dans lequel on actionne le frein (94) par le mouvement relatif entre le galet applicateur (42) et le galet de pressage (72).

**Patentansprüche**

1. Vorrichtung (10) zum Abtrennen eines Bandes (16), welches auf einen Körper (15) aufgebrecht ist, während der Körper (15) sich an der Vorrichtung (10) vorbeibewegt, wobei diese Vorrichtung (10) folgendes aufweist: ein Gehäuse (20) zur Bewegung zum Körper (15) hin und von diesem weg, eine Aufbringrolle (42) getragen vom Gehäuse (20) zum Aufbringen des Bandes (16) auf den Körper (15), Bremsmittel (94) zur Arretierung der Drehhung der Aufbringrolle (42), eine Haltevorrichtung (50) gleitend getragen am Gehäuse (20), eine Heftrolle (72) grehbar gelagert am halter (50), elastische Mittel (66), die den Halter (50) zum Körper (15) hin und die Heftrolle (72), in Berührung mit dem Körper (15) drücken, dadurch gekennzeichnet, daß die Bremsmittel (94) schwenkbar am Gehäuse (20) gelagert sind und daß Mittel (80) am Halter (50) vorgesehen sind, um die Bremsmittel (94) dann zu aktivieren, wenn das Gehäuse (20) und die Aufbringrolle (42) von dem Körper (15) um eine vorbestimmte Größe wegbewegt werden.

2. Vorrichtung (10) nach Anspruch 1, wobei die Bremsmittel (94) einen Bremsklotz (118) aufweisen, und zwar schwenkbar gelagert am Gehäuse (20), wobei Federmittel (108) den Bremsklotz (118) gegen die Aufbringrolle (42) drücken, um die Drehung der Aufbringrolle (42) zu arretieren.

3. Vorrichtung (10) nach Anspruch 1 oder 2, wobei die Mittel (80) auf dem Halter (50) zur Aktivierung der Bremsmittel (94) eine Nockenausnehmung (80) in einer Oberfläche des Halters (50) sind, und wobei die Bremsmittel (94) betriebsmäßig die Nockenausnehmung (80) kontaktieren, um die Bremsmittel (94) zu verschwenken, um so die Bremskraft an die Aufbringrolle (42) anzulegen.

4. Vorrichtung (10) nach Anspruch 2, wobei die Mittel (80) am Halter (50) zur Aktivierung der Bremsmittel (94) eine Nockenausnehmung (80) am Halter (50) sind, wobei die Bremsmittel (94) eine Nockenrolle (100) aufweisen, wobei die Federmittel (108) die Nockenrolle (100) in die Nockenausnehmung (80) dann drücken, wenn der Halter (50) und das Gehäuse (20) in einer vorbestimmten Relativposition sich befinden.

5. Vorrichtung (10) nach einem der Ansprüche 1 bis 2, wobei Strömungsmittelbetätigungsmittel (22) vorgesehen sind, um das Gehäuse (20) zum Körper (15) hin zu bewegen, und zwar zum Eingriff mit der Aufbringrolle (42) und der Heftrolle (72) mit dem Körper (15), wobei das Band (16) direkt auf den Körper (15) durch die Aufbringrolle (42) aufgebracht wird und an den Körper (15) durch die Heftrolle (72) angeheftet wird.

6. Vorrichtung (10) nach Anspruch 5, wobei elastische Mittel (28) vorgesehen sind, um das Gehäuse (20) und die Aufbringrolle (42) vom Körper (15) wegzubewegen, und zwar beim Ausstoßvorgang der Strömungsmittelbetätigungsmittel (22).

7. Vorrichtung nach einem der Ansprüche 1 bis 6, wobei die Bremsmittel (94) folgendes aufweisen:

eine Bremsanordnung (94) mit einer Schwenkbar am Gehäuse (20) gelagerten Platte (96), einen Armteil (104), der sich in einer Richtung entgegengesetzt zur Platte (96) erstreckt, und einen sich von der Platte (96) aus erstreckenden Lappen (114), wobei mindestens eine Nockenrolle (100) drehbar an der Platte (96) gelagert ist, wobei die Nockenrolle (100) mit dem Halter (50) in Eingriff steht und dazu dient, mit den Mitteln (80) auf dem Halter (50) in Eingriff zu kommen, wenn das Gehäuse (20) und der Halter (50) bezüglich einander bewegt werden, und wobei elastische Mittel (108) sich zwischen dem Gehäuse (20) und dem Armteil (104) der Bremsanordnung (94) erstrecken, um die Nockenrolle (100) zum Halter (50) hin zu drücken, wobei schließlich ein Bremsblock (118) auf dem Lappen (114) getragen wird und die Aufbringrolle (42) dann kontaktiert, wenn die Nockenrolle (100) in den Mitteln (80) am Halter (50) sitzt, um die Drehung der Aufbringrolle (42) zu stoppen.

8. Vorrichtung (10) nach einem der Ansprüche 1 bis 7, wobei die drei Halter (50) gleitend Seite an Seite in dem Gehäuse (20) angeordnet sind und eine Heftrolle (72) aufweisen, und zwar drehbar gelagert am vorstehenden Ende jedes Halters (50) in der vorbestimmten Position bezüglich der Aufbringrolle (42).

9. Vorrichtung (10) nach Anspruch 8, wobei Stoppmittel (78) an jedem Halter (50) vorgesehen sind, um das Ausmaß der Auswärtsbewegung der Halter (50) zu begrenzen.

10. Verfahren zum Aufbringen an Heften und sodann zum Trennen eines Bandes (16), welches auf einen Körper (15) aufgebracht wird, wobei folgende Schritte vorgesehen sind:

Zuführung eines Bandes (16) zu einer Aufbringrolle (42) in Kontakt mit dem sich bewegenden Körper (15), Anheften des Bandes (16) an dem Körper (15) durch Durchlaufen von mindestens einer Heftrolle (72) über dem Band (16) in Kontakt mit dem Körper (15), Anlegen einer Bremse (94) an die Aufbringrolle (42) zum Stoppen des Vorschubs des Bandes (16) zum Körper (15), Fortsetzung der Bewegung des Körpers (15), der noch immer in Kontakt mit der Heftrolle (72) steht, um das Band (16) zwischen der Aufbringrolle (42) und der Heftrolle (72) zu strecken und zu trennen, gekennzeichnet durch Rückführung der Aufbringrolle (42) vom Körper (15) bei Vollendung des Aufbaus der Lage des Bandes (16) auf dem Körper (15), wobei die Bremse (94) durch die Relativbewegung zwischen der Aufbringrolle (42) und der Heftrolle (72) aktiviert wird.

FIG. 1

FIG. 2

0 025 134

FIG. 3

FIG. 4

2

0 025 134

FIG. 5

FIG. 6

FIG. 7